# EUROPÄISCHE PATENTSCHRIFT

(11) **EP 0 941 263 B1**
(45) Veröffentlichungstag und Bekanntmachung des Hinweises auf die Patenterteilung: **19.12.2001**
(21) Anmeldenummer: 97952802.3
(22) Anmeldetag: 26.11.1997
(51) Int. Cl.: C08G 18/48, C08G 18/76

(54) **VERFAHREN ZUR DISKONTINUIERLICHEN HERSTELLUNG VON WEICHELASTISCHEN, OFFENZELLIGEN POLYURETHANSCHAUMSTOFFEN**
METHOD FOR THE DISCONTINUOUS PRODUCTION OF FLEXIBLE, OPEN-CELL POLYURETHANE FOAMS
PROCEDE DE PREPARATION DISCONTINUE DE MOUSSES POLYURETHANE SOUPLES ET ELASTIQUES A ALVEOLES OUVERTES

(30) Priorität: 02.12.1996 DE 19649828
(43) Veröffentlichungstag der Anmeldung: 15.09.1999
(73) Patentinhaber: Bayer Aktiengesellschaft, 51368 Leverkusen (DE)
(72) Erfinder: HETTEL, Hans, D-51503 Rösrath (DE); HAAS, Peter, D-42781 Haan (DE); ONNENBERG, Volker, D-51674 Wiehl (DE); NAUJOKS, Manfred, D-51399 Burscheid (DE); ILLGER, Hans-Walter, D-51503 Rösrath (DE)
(86) Internationale Anmeldenummer: EP9706584
(87) Internationale Veröffentlichungsnummer: WO9824827

(56) Entgegenhaltungen:
- EP-A- 0 449 609
- EP-A- 0 582 141
- US-A- 4 497 913

## Beschreibung

Bei der Herstellung von Polyurethanschaumstoffen ist ein hoher Stand der Technik erreicht worden, gleichwohl sind Herstellungsverfahren, Rohstoffe und Prozessparameter verbesserungswürdig, da einerseits Qualitätsanforderungen laufend steigen und andererseits manche physikalischen Treibmittel kritisch betrachtet werden.

Die Herstellung von Polyurethan-Blockschaumstoffen geschieht im Prinzip nach zwei Verfahrensweisen, der kontinuierlichen und der diskontinuierlichen Herstellung. Die diskontinuierliche Produktion wird z.B. oft für kleinere Produktionsmengen mit maschinentechnisch vergleichsweise geringerem Aufwand betrieben und ist in einigen Ländern sogar vorherrschend. Für eine diskontinuierliche Verarbeitung von Polyurethanrohstoffen ergeben sich gegenüber einer kontinuierlichen Herstellungsweise gewisse, wichtige Unterschiede, die aus dem einerseits ruhenden (diskontinuierliches Verfahren) und andererseits durch das Transportband vom Mischkopf weg bewegten Rohstoffgemisch resultieren (kontinuierliches Verfahren).

Bekanntlicherweise sind solche diskontinuierlich hergestellten Polyurethanschaumstoffe bei einem hohen Grad an Geschlossenzelligkeit sehr anfällig gegen die Bildung von Rissen, gröberen Zellen oder Lunkern und meist durch knapp bemessene Startzeiten gekennzeichnet. Diese Gegebenheiten lassen Schaumstoffe entstehen, die daher vergleichsweise schlechtere mechanische Eigenschaften aufweisen.

Stand der Technik zur Vermeidung der Rissbildung ist der Einsatz einer erhöhten Isocyanatmenge, also ein Reaktionsablauf bei hohem Index, wobei solche von 110 bis 120 üblich sind. Hierdurch entstehen jedoch härtere Schaumstoffe höherer Rohdichte, die zudem noch geschlossenzellig und weniger elastisch sind. Über die Blockhöhe sind weiter inhomogene mechanische Eigenschaften festzustellen. Zur Absenkung der Härte müssen daher oft physikalische Treibmittel wie FCKW, HFCKW oder geeignete Chlorkohlenwasserstoffe wie z.B. Methylenchlorid zugesetzt werden. Durch das häufig verwendete Methylenchlorid ergibt sich im Endeffekt oft noch eine Zunahme der Geschlossenzelligkeit. EP-A-0 449 609 beschreibt ein Verfahren zur Herstellung von Polyurethanschaumstoffen, wobei eine Mischung aus 2,4 - TDI und 2,6-TDI verwendet wird.

Aufgabe der vorliegenden Erfindung war es daher, ein diskontinuierliches Verfahren zur Herstellung von Polyurethan-Blockschaumstoffen bereitzustellen, das Schaumstoffe mit üblichem Grad an Offenzelligkeit wie bei kontinuierlicher Herstellung ohne Risse, Lunker und Taschen, mit einheitlichen Eigenschaften über die Blockhöhe sowie mit üblichem Härtespielraum ohne die Mitverwendung physikalischer Treibmittel ergibt.

Überraschenderweise ist dies durch Verwendung bestimmter Isocyanatabmischungen und bestimmter Polyole möglich, wobei sich zusätzlich eine bessere Gasausbeute ergibt.

Gegenstand der vorliegenden Erfindung ist ein Verfahren zur diskontinuierlichen Herstellung von weichelastischen, offenzelligen Polyurethanschaumstoffen durch Umsetzung von
A) Polyisocyanaten mit
B) Verbindungen mit mindestens zwei gegenüber Isocyanaten reaktionsfähigen Wasserstoffatomen von einem Molekulargewicht von 500 bis 10.000,
B1) gegebenenfalls Vernetzern mit mindestens zwei gegenüber Isocyanaten reaktionsfähigen Wasserstoffatomen von einem Molekulargewicht von 32 bis 499,
B2) gegebenenfalls füllstoffhaltigen Polyolen mit mindestens zwei gegenüber Isocyanaten reaktionsfähigen Wasserstoffatomen von einem Molekulargewicht von 500 bis 10.000,
B3) gegebenenfalls Polyolen mit mindestens zwei gegenüber Isocyanaten reaktionsfähigen Wasserstoffatomen von einem Molekulargewicht von 500 bis 10.000,
C) Wasser und gegebenenfalls organischer Treibmitteln,
D) Stabilisatoren bekannter Art,
E) Aktivatoren bekannter Art,
F) weiteren an sich bekannten Hilfs- und Zusatzmitteln,
dadurch gekennzeichnet, daß als Polyisocyanat A) Isocyanate oder Isocyanatgemische mit einer Zusammensetzung von 83 bis 99 Gew.-% 2,4-Toluylendiisocyanat und 1 bis 17 Gew.-% 2,6-Toluylendiisocyanat, und daß als Polyolkomponente B) Polyole mit einem Gehalt an Propylenoxid in den Polyetherpolyolketten von 90 bis 100 Gew.-%, bevorzugt 95 bis 100 Gew.-%, besonders bevorzugt 100 Gew.-% Propylenoxid und einer Funktionalität von 2,5 bis 4,5, bevorzugt 2,75 bis 3,25 eingesetzt werden.

Überraschenderweise wurde nämlich gefunden, daß durch höhere Anteile an 2,4-Toluylendiisocyanat als in dem bei der Herstellung von Blockschaumstoffen üblichen "T 80" mit 80 Gew.-% 2,4-Toluylendiisocyanat sich in diskontinuierlichem Verfahren hergestellte Blockschaumstoffe wesentlich verbessert bezüglich
- Offenzelligkeit,
- Rissbildung und Lunkerstörstellen,
- einheitlichen mechanischen Werten,
- Gasausbeute und Rohdichte und
- Elastizität und Härtespielraum
herstellen lassen.

Als Schaumstabilisatoren D) kommen vor allem Polyethersiloxane, bevorzugt wasserunlösliche Vertreter, in Frage. Diese Verbindungen sind im allgemeinen so aufgebaut, daß ein kürzer kettiges Copolymerisat aus Ethylenoxid und Propylenoxid mit einem Polydimethylsiloxanrest verbunden ist. Derartige Schaumstabilisatoren sind z.B. in den US-PS 2 834 748, 2 917 480 und 3 629 308 sowie US-PS 2 917 480 beschrieben.

Katalysatoren E) der an sich bekannten Art, sind z.B. tertiäre Amine, wie Triethylamin, Tributylamin, N-Methyl-morpholin, N-Ethyl-morpholin, N,N,N', N'-Tetramethylethylendiamin, Pentamethyl-diethylentriamin und höhere Homologe (DE-A 2 624 527 und 2 624 528), 1,4-Diazabicyclo-(2,2,2)-octan, N-Methyl-N'-dimethylaminoethylpiperazin, Bis-(dimethylaminoalkyl)-piperazine, N,N-Dimethylbenzylamin, N,N-Dimethylcyclohexylamin, N,N-Diethylbenzylamin, Bis-(N,N-diethylaminoethyl)-adipat, N,N,N', N'-Tetramethyl-1,3-butandiamin, N,N-Dimethyl-β-phenylethylamin, 1,2-Dimethylimidazol, 2-Methylimidazol, monocyclische und bicyclische Amidine sowie Bis-(dialkylamino)alkylether wie 2.2-Bis-(dimethylaminoethyl)-ether.

Als Katalysatoren E) können auch organische Metallverbindungen, insbesondere organische Zinnverbindungen, verwendet werden. Als organische Zinnverbindungen kommen neben schwefelhaltigen Verbindungen wie Di-n-octyl-zinn-mercaptid vorzugsweise Zinn(II)-salze von Carbonsäuren wie Zinn(II)-acetat, Zinn(II)-octoat, Zinn(II)-ethylhexoat und Zinn(II)-laurat und die Zinn(IV)-Verbindungen, z.B. Dibutylzinnoxid, Dibutylzinndichlorid, Dibutylzinndiacetat, Dibutylzinndilaurat, Dibutylzinnmaleat oder Dioctylzinndiacetat in Betracht.

Zusätzliche Beispiele von gegebenenfalls erfindungsgemäß mitzuverwendenden Komponenten D, E und F, weiteren Zusatzstoffen und Schaumstabilisatoren sowie Zellreglern, Reaktionsverzögerern, Stabilisatoren, flammhemmenden Substanzen, Weichmachern, Farbstoffen und Füllstoffen sowie fungistatisch und bakteriostatisch wirksamen Substanzen sowie Einzelheiten über Verwendungs- und Wirkungsweise dieser Zusatzmittel sind im Kunststoff-Handbuch, Band VII, herausgegeben von Vieweg und Höchtlen, Carl Hanser Verlag, München 1993, 3. Auflage, z.B. auf den Seiten 104 bis 127 beschrieben.

Nach dem erfindungsgemäßen Verfahren in diskontinuierlichem Prozess hergestellte Blockschaumstoffe sind in ihren mechanischen Eigenschaften den in kontinuierlichem Prozess hergestellten Blockschaumstoffen ebenbürtig. Zudem können diese nun in üblichem Indexrahmen zwischen 90 und 110 hergestellt werden. Gleichzeitig ist nun die härtereduzierende Eigenschaft Ethylenoxid-reicher Polyole nutzbar. Im Gegensatz zu bisher üblichen Rezepturen, bei denen zur Härtereduktion die Mitverwendung von Treibmitteln wie HFCKW oder Methylenchlorid erforderlich war, kann erfindungsgemäß auf die Verwendung dieser physikalischen Treibmittel auch verzichtet werden.

Die Abhandlung im Kunststoff-Handbuch Nr. 7, Polyurethane, Hanser Verlag, in Kap. 5.1, Seiten 213/214 ist so zu deuten, daß ein höherer Anteil an 2,6-Toluylendiisocyanat offenzellige Schaumstoffe ergeben soll. Demnach ergibt ein Isocyanat mit gegenüber "T 80" noch reduziertem Anteil an 2,6-TDI extrem geschlossenzellige Schaumstoffe. Überraschenderweise werden gegenüber jetzt aber erfindungsgemäß "T 80" sogar offenzelligere und elastischere Schaumstoffe mit verbesserter Gasausbeute erhalten, die sich durch eine höhere Rückprallelastizität auszeichnen, wenn demgegenüber diskontinuierlich gearbeitet wird.

Das erfindungsgemäße Verfahren wird als diskontinuierlicher Prozeß in an sich üblicher Weise durchgeführt. Die Rohstoffe werden üblicherweise entsprechend der Rezeptur in einen rechteckigen Mischbehälter eingewogen oder eindosiert. Mit Hilfe eines per Hand oder maschinell betriebenen Rührers werden sie vermischt und dann durch Hochziehen des Behälters in der Form verteilt. Durch Verwendung eines sogenannten "schwimmenden Deckels", einer leichten Holzplatte, die, ohne zu verkanten, während des Aufsteigvorganges in die Schäumform eingebracht wird, wird ein rechteckiger Blockquerschnitt erhalten.

Im Bereich der besonders problematischen Bodenzone in einer Höhe von 1 bis 30 cm vom Blockboden aus gerechnet werden bisher nicht gekannte Offenzelligkeiten erreicht, die einem Luftwiderstandswert von 40 bis 90 mm Wassersäule (WS) entsprechen. Solche Werte liegen üblicherweise nur bei Blockschaumstoffen vor, die in kontinuierlichem Fertigungsprozess hergestellt werden. Diskontinuierlich hergestellte Blöcke hatten bisher 300 mm WS als Luftwiderstandswert.

Überraschend leicht und vorteilhaft lassen sich zudem Polyetherpolyole mit 100% Propylenoxidanteil verarbeiten, die bekanntlich mit der üblichen Isocyanatkombination schwierig verarbeitbar sind.

Die Polyolkomponente B) macht bevorzugt 100 % des Polyetherpolyolanteils aus; die Polyolkomponenten B1) bis B3) können jedoch in Anteilen bis zu 10% der Polyolkomponente B) mitverwendet werden, um die Härteeigenschaften des Schaumstoffs einzustellen. Bei der Mitverwendung der Polyolkomponenten B1) bis B3) wird die Prozeßsicherheit durch die überraschende Wirkung der 2,4-reichen TDI-Abmischungen nicht beeinträchtigt.

### Meßtechnische Erfassung der Offenzelligkeit

### 1. Begriff der Offenzelligkeit bzw. des Strömungswiderstandes:

Unter dem Strömungswiderstand eines Schaumstoffs versteht man den Widerstand, den ein Schaumstoff einem Luftstrom beim Durchblasen entgegenbringt. Bei diesem Verfahren, das nur für Vergleichsmessungen gedacht ist, ist der Strömungswiderstand gleich der Höhe der Wasserinnensäule in einem 7 mm-Rohr (Innenrohr) und wird in mm Wassersäule (WS) angegeben. Eine Umrechnung dieser Werte in andere Maßsysteme ist nicht möglich.

### 2. Probenform:

Für die Messung der Offenzelligkeit bzw. des Strömungswiderstandes wurden Probekörper der Größe 20 x 20 x 10 cm von 10, 50 und 100 cm Höhe des Schaumstoffblocks geprüft.

### 3. Meßgerät:

Das Prüfgerät besteht prinzipiell aus einem mit einer Millimetereinteilung von 0 bis 350 versehenen Glaszylinder, dessen Innendurchmesser 36 mm beträgt, und einem Innenrohr von 7 mm lichter Weite. Dieses Innenrohr endet oben in einem T-Stück, an das an der einen Seite die Luftzufuhr und an der anderen Seite der Schlauch mit dem Meßkopf angeschlossen werden kann. Der Schlauch für den Meßkopf soll dabei einen Innendurchmesser von 12 mm und eine Länge von ca 1,80 m besitzen, wobei durch Länge und Innendurchmesser des Schlauches bei gegebenem Glasbehälter die Empfindlichkeit des Gerätes eingestellt werden kann.

Der Glaszylinder ist nach unten geschlossen und kann über den nach hinten angebrachten Trichter mit Wasser gefüllt werden. Neben der Millimetereinteilung ist auf dem Glaszylinder H₂O-Stand (H₂O-Std) und Vordruck eingraviert, deren Bedeutung nachfolgend erläutert wird.

### 4. Vorbereiten des Prüfgerätes und Durchführung der Messung:

Der Anschluß des Prüfgerätes an das Luftnetz erfolgt über zwei Lufthähne, einem Druckminderer und einem Schlauch mit beliebiger Länge und beliebigem Durchmesser, wobei der Druckminderer auf ca. 2 bar eingestellt sein sollte.

Der Glasbehälter wird mit destilliertem Wasser gefüllt, bis der untere Meniskusrand die H₂O-Std-Marke erreicht. Dann wird Hahn 1 aufgedreht und die Strömungsgeschwindigkeit am Hahn 2 so lange verändert, bis der untere Meniskusrand der Innensäule die 0 mm-Marke erreicht und damit ein Vordruck von 100 mm WS eingestellt ist.

Nach der Einstellung des Vordrucks, der für die Meßwerte entscheidend ist, wird der Meßkopf ohne Druck auf die Probe gesetzt und die sich ergebende Höhe der Wassersäule im Innenrohr abgelesen. Da die Wassersäule mit 0 mm beginnt, ist der abgelesene Wert gleich dem Strömungswiderstand und bedarf keiner weiteren Berechnung.

### Bestimmung der Rückprallelastizität

Auf einen Probekörper der Größe 20 x 20 x 10 cm wird in der Probenmitte ein Glasrohr der Höhe 50 cm mit mm Skala gesetzt und aus dieser Höhe eine 28 g schwere Stahlkugel fallen gelassen. Die Elastizität ergibt sich aus dem Zurückspringen der Kugel auf eine bestimmte Höhe und wird in % vom Ausgangswert angegeben.

Es erfolgen jeweils 5 Messungen.

Die folgenden Beispiele sollen die Erfindung näher erläutern, ohne sie jedoch in ihrem Umfang zu begrenzen.

### Beispiele

### Beschreibung der Rohstoffe:

- Polyol 1:: Polyetherpolyol der OH-Zahl 56, hergestellt durch Addition von Propylenoxid an Glycerin als Starter (erfindungsgemäß)
- Polyol 2:: Polyetherpolyol der OH-Zahl 36, hergestellt durch Addition von 72 Gew.-% Ethylenoxid und 28 Gew.-% Propylenoxid an Glycerin als Starter (Komponente B3)
- Isocyanat 1:: Gemisch aus 14 Gew.-% 2,6-Toluylendiisocyanat (2,6-TDI) und 86 Gew.-% 2,4-TDI (erfindungsgemäß)
- Isocyanat 2:: 93 Gew.-% 2,4-TDI und 7 Gew.-% 2,6-TDI (erfindungsgemäß)
- Isocyanat 3:: 99 Gew.-% 2,4-TDI (erfindungsgemäß)
- Isocyanat 4:: Gemisch aus 20 Gew.-% 2,6-TDI und 80 Gew.-% 2,4-TDI (Vergleich)

In einer diskontinuierlich arbeitenden Blockverschäumungsanlage, Typ BFM der Fa. Hennecke, D-53754 Birlinghoven, wurden folgende Rohstoffe in eine mit Trennpapieren ausgeschlagene Kiste der Größe 100 x 200 cm sowie 110 cm Höhe eingebracht.:

**Tabelle 1**

| Bsp.-Nr. | 1 | 2 | 3 | 4 | 5 |
|---|---|---|---|---|---|
| Polyol 1 | 100 | 100 | 100 | 100 | 100 |
| Stabilisator OS 22 der Bayer AG | 0,9 | 0,9 | 1,1 | 1,1 | 1,1 |
| Aktivator A 1 (Air Products) | 0,1 | 0,1 | 0,05 | 0,07 | 0,07 |
| Desmorapid SO der Bayer AG | 0,12 | 0,12 | 0,23 | 0,23 | 0,25 |
| Wasser | 3,0 | 3,0 | 3,0 | 3,0 | 3,0 |
| Methylenchlorid | - | - | - | - | 2,0 |
| Polyisocyanat 1 | 40,7 | 43,3 | - | - | - |
| Polyisocyanat 4 Vergleich | - | - | 40,7 | 43,3 | 43,3 |
| Index | 108 | 115 | 108 | 115 | 115 |
| Startzeit (s) | 15 | 14 | 11 | 10 | 11 |
| Steigzeit (s) | 120 | 117 | 110 | 107 | 111 |
| Eigenschaften | | | | | |
| Zellstruktur | f | f | g | g | g |
| Innenrisse | n | n | j | j | n |
| Seitenrisse | n | n | j | j | n |
| Taschen | n | n | j | n | n |
| Offenzelligkeit bzw. Strömungswiderstand Angaben in mm Wassersäule (WS) | | | | | |
| in Schaumstoff-Höhe | | | | | |
| 10 cm | 80 | 90 | 200 | 250 | 300 |
| 50 cm | 55 | 80 | 150 | 200 | 300 |
| 100 cm | 40 | 40 | 90 | 150 | 150 |
| Rohdichte (kg/m³) | 29,3 | 31,5 | * | 32,5 | 29,9 |
| Stauchhärte (kPa) | 3,75 | 4,9 | * | 4,8 | 4,2 |
| Rückprallelastizität (%) | 52 | 52 | * | 40 | 42 |

**Tabelle 2**

| Bsp.-Nr. | 6 | 7 | 8 | 9 |
|---|---|---|---|---|
| Polyol 1 | 95 | 95 | 95 | 95 |
| Polyol 2 | 5 | 5 | 5 | 5 |
| Stabi. OS 22 | 0,7 | 0,7 | 0,7 | 0,7 |
| Dimethylethanolamin | 0,3 | 0,3 | 0,3 | 0,3 |
| Aktivator A 1 | 0,05 | 0,05 | 0,05 | 0,05 |
| Desmorapid SO | 0,13 | 0,15 | 0,17 | 0,18 |
| Wasser | 3,0 | 3,0 | 3,0 | 3,0 |
| Isocyanat 1 | 36,7 | - | - | - |
| Isocyanat 4 Vergleich | - | 36,7 | 37,5 | 43,5 |
| Index | 98 | 98 | 100 | 116 |
| Startzeit (s) | 7 7 8 | | | 8 |
| Steigzeit (s) | 135 | 135 | 135 | 135 |
| Eigenschaften | | | | |
| Zellstruktur | f | g | g | g |
| Innenrisse | n | j | j | n |
| Seitenrisse | n | j | j | n |
| Taschen | n | j | j | n |
| Offenzelligkeit bzw. Strömungswiderstand Angabe in mm Wassersäule (WS) in Schaumstoff-Höhe | | | | |
| 10 cm | 90 | * | * | 350 |
| 50 cm | 70 | * | * | 250 |
| 100 cm | 40 | * | * | 150 |
| Rohdichte (kg/m³) | 33,2 | * | * | 35,0 |
| Stauchhärte (kPa) | 2,5 | * | * | 4,3 |
| Rückprallelastizität (%) | 52 | * | * | 46 |

**Tabelle 3**

| Bsp.-Nr. | 10 | 11 | 12 | 13 | 14 |
|---|---|---|---|---|---|
| Polyol 1 | 100 | 100 | 100 | 100 | 100 |
| Stabilisator OS 22 | 1,1 | 1,1 | 1,1 | 1,1 | 1,4 |
| Aktivator A 1 | 0,07 | 0,07 | 0,07 | 0,05 | 0,1 |
| Desmorapid SO | 0,12 | 0,12 | 0,09 | 0,23 | 0,23 |
| Wasser | 4,2 | 4,2 | 4,2 | 4,2 | 4,2 |
| Polyisocyanat 1 | 53,2 | - | - | - | - |
| Polyisocyanat 2 | - | 53,2 | - | - | - |
| Polyisocyanat 3 | - | - | 53,2 | - | - |
| Polyisocyanat 4 Vergleich | - | - | - | 53,2 | 56,7 |
| Index | 108 | 108 | 108 | 108 | 115 |
| Startzeit (s) | 17 | 17 | 14 | 11 | 11 |
| Steigzeit (s) | 115 | 115 | 120 | 94 | 95 |
| Eigenschaften | | | | | |
| Zellstruktur | f | f | f | g | g |
| Innenrisse | n | n | n | j | n |
| Seitenrisse | n | n | n | j | n |
| Taschen | n | n | n | j | n |
| Offenzelligkeit bzw. Strömungswiderstand Angabe in mm Wassersäule (WS) in Schaumstoff-Höhe | | | | | |
| 10 cm | 80 | 70 | 80 | 250 | 300 |
| 50 cm | 60 | 60 | 65 | 150 | 300 |
| 100 cm | 50 | 50 | 55 | 90 | 200 |
| Rohdichte (kg/m³) | 22,2 | 22,0 | 21,8 | 22,6 | 22,9 |
| Stauchhärte (kPa) | 3,4 | 3,4 | 2,5 | 3,6 | 4,3 |
| Rückprallelastizität (%) | 48 | 48 | 48 | 42 | 38 |
| Zellstruktur f: fein | | | | | |
| Zellstruktur g: grob | | | | | |
| Innenrisse/Seitenrisse/Taschen j: ja | | | | | |
| Innenrisse/Seitenrisse/Taschen n: nein | | | | | |
| *: wegen starker Störungen nicht auswertbar | | | | | |

Aus den erfindungsgemäßen Beispielen geht hervor, daß Verwendung von 2,4-reichem TDI gegenüber der Standardzusammensetzung TDI 80 überraschend feinzellige, offene, elastische und rissunanfällige diskontinuierlich hergestellte Schaumstoffblöcke ergibt. Durch diese Verfahrensweise ist ein Arbeiten mit hohen Indices zur Unterdrückung der Rißbildung nicht mehr erforderlich; somit entfällt hier auch der Einsatz von Treibmitteln wie z.B. Methylenchlorid, um höhere Härten zu reduzieren, wie die Beispiele 1 und 2 bzw. 4 und besonders 5 belegen. Auffallend sind die erheblichen Unterschiede in Elastizität und Offenzelligkeit. Die erfindungsgemäßen Isocyanate erlauben gemäß Beispiel 6 zudem, die Härte der Schaumstoffe über die Verwendung Ethylenoxid-reicher Polyole zu beeinflussen, während bei Einsatz der Standardzusammensetzung TDI 80 in Beispiel 9 eine Härtezunahme resultiert, also weichere und leichtere Typen nur durch Mitverwendung organischer Treibmittel erhalten werden. Durch geringere Anteile von 2,6-TDI läßt sich bei gleichbleibender Offenzelligkeit die Härte weiter absenken, während die Gasausbeute effektiver genutzt wird, wie aus den Beispielen 11 und 12 hervorgeht, während TDI 80 gemäß Beispiel 14 wieder die bekannten Nachteile einer geringen Elastizität, schlechteren Gasausbeute, Geschlossenzelligkeit und Rißbildung ergibt.

### Vergleichsbeispiel 15

Vergleich mit einem kontinuierlich mit TDI 80 hergestellten Schaum: Es wurde für den kontinuierlichen Schaum eine Rezeptur, wie für Beispiel 1 angegeben, eingesetzt. Die kontinuierliche Blockverschäumung erfolgte auf einer UBT der Fa. Mennecke.

| Erfindungsgemäßes Beispiel 1 (diskontinuierlich) | | | Beispiel 15 (kontinuierlich mit TDI 80) |
|---|---|---|---|
| Rohdichte (kg/m³) | | 29,3 | 31 |
| Stauchhärte (kPa) | | 3,75 | 4,0 |
| Druckverformungsrest (%) | | 2,3 | 2,6 |
| Rückprallelastizität (%) | | 52 | 52 |
| Offenzelligkeit in Schaumstoffhöhe | | | |
| | 10 cm | 80 | 60 |
| | 50 cm | 55 | 50 |
| | 100 cm | 40 | 40 |
| (in mm WS) Zellstruktur | | fein | fein |

Wie ein Vergleich mit Beispiel 1 zeigt, weisen erfindungsgemäß diskontinuierlich hergestellte Schaumstoffe des gleichen Rohdichtebereiches bezüglich Offenzelligkeit, Elastizität und Druckverformungsrest nahezu identische Eigenschaften wie der kontinuierlich hergestellte Schaumstoff auf.

## Patentansprüche

1. Verfahren zur diskontinuierlichen Herstellung von weichelastischen, offenzelligen Polyurethanschaumstoffen durch Umsetzung von
A) Polyisocyanaten mit
B) Verbindungen mit mindestens zwei gegenüber Isocyanaten reaktionsfähigen Wasserstoffatomen von einem Molekulargewicht von 500 bis 10.000,
B1) gegebenenfalls Vernetzern mit mindestens zwei gegenüber Isocyanaten reaktionsfähigen Wasserstoffatomen von einem Molekulargewicht von 32 bis 499,
B2) gegebenenfalls füllstoffhaltigen Polyolen mit mindestens zwei gegenüber Isocyanaten reaktionsfähigen Wasserstoffatomen von einem Molekulargewicht von 500 bis 10.000,
B3) gegebenenfalls Polyolen mit mindestens zwei gegenüber Isocyanaten reaktionsfähigen Wasserstoffatomen von einem Molekulargewicht von 500 bis 10.000,
C) Wasser und gegebenenfalls organischen Treibmitteln,
D) Stabilisatoren
E) Aktivatoren
F) weiteren Hilfs- und Zusatzmitteln,
**dadurch gekennzeichnet, daß** als Polyisocyanat A) Isocyanatgemische mit einer Zusammensetzung von 83 bis 99 Gew.-% 2,4-Toluylendiisocyanat sowie 1 bis 17 Gew.-% 2,6-Toluylendiisocyanat und daß als Polyetherpolyolkomponente B) Polyole mit einem Gehalt an Propylenoxid in den Polyetherpolyolketten von 90 bis 100 Gew.-% eingesetzt werden.

2. Verfahren nach Anspruch 1, **dadurch gekennzeichnet, daß** das Polyetherpolyol B) Polyole mit einem Gehalt von 95 bis 100 Gew.-% Propylenoxid in den Polyetherketten eingesetzt werden.

3. Verfahren nach Anspruch 1, **dadurch gekennzeichnet, daß** das Polyetherpolyol B) Polyole mit einem Gehalt an Propylenoxid von 100 Gew.-% in den Polyetherketten eingesetzt werden.

4. Verfahren nach Anspruch 1 bis 3, **dadurch gekennzeichnet, daß** ein Toluylendiisocyanat der Zusammensetzung von 83 bis 93 Gew.-% 2,4-Toluylendiisocyanat und 7 bis 17 Gew.-% 2,6-Toluylendiisocyanat eingesetzt wird.

5. Verfahren nach Anspruch 1 bis 3, **dadurch gekennzeichnet, daß** ein Toluylendiisocyanat der Zusammensetzung von 93 bis 99 Gew.-% 2,4-Toluylendiisocyanat und 1 bis 7 Gew.-% 2,6-Tolulyendiisocyanat eingesetzt wird.

6. Verfahren nach Anspruch 1 bis 5, **dadurch gekennzeichnet, daß** als Polyetherpolyol B) ein Polyetherpolyol mit einer Funktionalität von 2,5 bis 4,5 eingesetzt wird.

7. Verwendung von Polyisocyanaten mit einer Zusammensetzung von 83% bis 99% 2.4- und 17% bis 1 % 2.6-Toluylendiisocyanat, in kombination mit Polyetherpolyolen mit einem Gehatt von 90 bis 100 Gew.-% Propylenoxid in der Polyetherkette zur diskontinuierlichen Herstellung von offenzelligen, weichelastischen Blockschaumstoffen.

8. Verwendung von Polyisocyanaten nach Anspruch 7, **dadurch gekennzeichnet, daß** Polyisocyanate mit einer Zusammensetzung von 83% bis 93% 2.4- und 7% bis 17% 2.6-Toluylendiisocyanat und Polyetherpolyole B) mit einem Gehalt von 100% Propylenoxid in der Polyetherkette des Molekulargewichts 2570 bis 6000 verwendet werden.

## Claims

1. A process for the batchwise production of flexible, open cell polyurethane foams by reacting
A) polyisocyanates with
B) compounds with at least two hydrogen atoms capable of reacting with isocyanates and a molecular weight of 500 to 10,000,
B1) optionally, cross-linking agents with at least two hydrogen atoms capable of reacting with isocyanates and a molecular weight of 32 to 499,
B2) optionally, filler-containing polyols with at least two hydrogen atoms capable of reacting with isocyanates and a molecular weight of 500 to 10,000,
B3) optionally, polyols with at least two hydrogen atoms capable of reacting with isocyanates and a molecular weight of 500 to 10,000,
C) water and optionally organic blowing agents,
D) stabilisers,
E) activators,
F) further auxiliary agents and additives,
**characterised in that** isocyanate mixtures with a composition of 83 to 99 wt.% of 2,4-toluylene diisocyanate and 1 to 17 wt.% of 2,6-toluylene diisocyanate are used as polyisocyanate A) and polyols with a concentration of propylene oxide in the polyetherpolyol chains of 90 to 100 wt.% are used as polyetherpolyol component B).

2. A process according to Claim 1, **characterised in that** polyols with a concentration of 95 to 100 wt.% of propylene oxide in the polyether chains are used as polyetherpolyol B)

3. A process according to Claim 1, **characterised in that** polyols with a concentration of 100 wt.% of propylene oxide in the polyether chains are used as polyetherpolyol B).

4. A process according to Claims 1 to 3, **characterised in that** a toluylene diisocyanate with the composition 83 to 93 wt.% of 2,4-toluylene diisocyanate and 7 to 17 wt.% of 2,6-toluylene diisocyanate is used.

5. A process according to Claims 1 to 3, **characterised in that** a toluylene diisocyanate with the composition 93 to 99 wt.% of 2,4-toluylene diisocyanate and 1 to 7 wt.% of 2,6-toluylene diisocyanate is used.

6. A process according to Claims 1 to 5, **characterised in that** a polyetherpolyol with a functionality of 2.5 to 4.5, is used as polyetherpolyol B).

7. Use of polyisocyanates with a composition of 83 % to 99 % of 2,4-toluylene diisocyanate and 17 % to 1 % of 2,6-toluylene diisocyanate, in combination with polyetherpolyols with a concentration of 90 to 100 wt.% of propylene oxide in the polyether chain, for the batchwise production of open cell, flexible slabstock foams.

8. Use of polyisocyanates according to Claim 7, **characterised in that** polyisocyanates with a composition of 83 % to 93 % of 2,4-toluylene diisocyanate and 7 % to 17 % of 2,6-toluylene diisocyanate and polyetherpolyols B) with a concentration of 100 % of propylene oxide in the polyether chain and with a molecular weight of 2570 to 6000 are used.

## Revendications

1. Procédé de préparation discontinue de mousses de polyuréthane souples et élastiques, à alvéoles ouvertes, par réaction de
A) des polyisocyanates avec
B) des composés avec au moins deux atomes d'hydrogène réactifs vis-à-vis des isocyanates ayant une masse moléculaire de 500 à 10 000,
B1) éventuellement des agents de réticulation avec au moins deux atomes d'hydrogène réactifs vis-à-vis des isocyanates avec une masse moléculaire de 32 à 499,
B2) éventuellement des polyols contenant des charges avec au moins deux atomes d'hydrogène réactifs vis-à-vis des isocyanates ayant une masse moléculaire de 500 à 10 000,
B3) éventuellement des polyols avec au moins deux atomes d'hydrogène réactifs vis-à-vis des isocyanates ayant une masse moléculaire de 500 à 10 000,
C) de l'eau et éventuellement des agents gonflants organiques,
D) des stabilisants,
E) des activateurs,
F) d'autres auxiliaires et additifs,
**caractérisé en ce qu'**on fait réagir comme polyisocyanate A) des mélanges d'isocyanate avec une composition de 83 à 99% en poids de diisocyanate de 2,4-toluylène ainsi que 1 à 17% en poids de diisocyanate de 2,6-toluylène et **en ce qu'**on fait réagir comme composants de polyétherpolyol B) des polyols avec une teneur en oxyde de propylène dans les chaînes polyétherpolyol de 90 à 100% en poids.

2. Procédé selon la revendication 1, **caractérisé en ce qu'**on fait réagir le polyétherpolyol B) de polyols avec une teneur de 95 à 100% en poids d'oxyde de propylène dans les chaînes polyéther.

3. Procédé selon la revendication 1, **caractérisé en ce qu'**on fait réagir le polyétherpolyol B) de polyols avec une teneur d'oxyde de propylène de 100% en poids dans les chaînes polyéther.

4. Procédé selon les revendications 1 à 3, **caractérisé en ce qu'**on fait réagir un diisocyanate de toluylène de composition 83 à 93% en poids de diisocyanate de 2,4-toluylène et 7 à 17% en poids de diisocyanate de 2,6-toluylène.

5. Procédé selon les revendications 1 à 3, **caractérisé en ce qu'**on fait réagir un diisocyanate de toluylène de composition 93 à 99% en poids de diisocyanate de 2,4-toluylène et 1 à 7% en poids de diisocyanate de 2,6-toluylène.

6. Procédé selon les revendications 1 à 5, **caractérisé en ce qu'**on fait réagir comme polyétherpolyol B) un polyétherpolyol avec une fonctionnalité de 2,5 à 4,5.

7. Utilisation de polyisocyanates avec une composition de 83% à 99% de diisocyanate de 2,4-toluylène et 17% à 1% de diisocyanate de 2,6-toluylène en combinaison avec des polyétherpolyols avec une teneur de 90 à 100% en poids d'oxyde de propylène dans la chaîne polyéther pour la préparation discontinue de mousses en bloc élastiques souples, à alvéoles ouvertes.

8. Utilisation de polyisocyanates selon la revendication 7, **caractérisée en ce qu'**on utilise des polyisocyanates avec une composition de 83% à 93% de diisocyanate de 2,4-toluylène et 7% à 17% de diisocyanate de 2,6-toluylène et des polyétherpolyols B) avec une teneur de 100% d'oxyde de propylène dans la chaîne polyéther de masse moléculaire 2570 à 6000.
